# EUROPÄISCHE PATENTSCHRIFT

(11) **EP 1 038 554 B1**
(45) Veröffentlichungstag und Bekanntmachung des Hinweises auf die Patenterteilung: **26.08.2009**
(21) Anmeldenummer: 00105440.2
(22) Anmeldetag: 15.03.2000
(51) Int. Cl.: A62C 2/06

(54) **Brandschutzklappe zum Einbau in eine Wandöffnung**
Fire prevention valve to be mounted in a wall opening
Valve anti-incendie adapté à être monté dans une ouverture murale

(30) Priorität: 20.03.1999 DE 29905077 U
(43) Veröffentlichungstag der Anmeldung: 27.09.2000
(73) Patentinhaber: TROX GmbH, 47506 Neukirchen-Vluyn (DE)
(72) Erfinder: Dammers, Heirich, Dipl.-Ing., 47661 Issum (DE); Bunge, Udo, 47506 Neukirchen-Vluyn (DE); Gurny, Rüdiger, 46459 Rees-Millingen (DE)
(74) Vertreter: DR. STARK & PARTNER

(56) Entgegenhaltungen:
- EP-A- 0 894 825
- DE-A- 3 933 997
- DE-U- 29 712 909
- US-A- 4 848 043

## Beschreibung

Die Erfindung betrifft eine Brandschutzklappe zum Einbau in eine Wandöffnung.

Brandschutzklappen sind aus der Praxis in verschiedenen Ausführungen bekannt. Sie besitzen eine schwenkbar gelagerte Absperrklappe, die manuell oder motorisch betätigt werden kann. Brandschutzklappen werden als Teil von Lüftungsleitungen in Wanddurchführungen eingebaut. Sie sollen im Brandfall die Lüftungsleitung abschließen und verhindern, dass ein Brand aus einem Raum sich in den nächsten Raum ausbreitet. Dementsprechend werden sie in eine zugeordnete Wandöffnung mit Abstand zum Öffnungsrand eingesetzt und der Abstandzwischenraum wird mit einem Mörtel oder dergleichen verfüllt. Diese Arbeiten sind im Allgemeinen aufwendig.

Aus der DE 39 33 997 A1 ist die Verwendung einer Brandschutzklappe in einer Brandabschlussmanschette bekannt, wobei in der Innenseite ein bei Hitzeeinwirkung stark quellbares Material vorgesehen ist. Aus der US-PS 4,848,043 ist ein Unterflurverbindungselement zur Vermeidung eines Übertrittes eines Feuers bekannt. Dieses wird in eine Öffnung eingesetzt, wobei der verbleibende Spalt nach der Montage mit Beton ausgefüllt wird.

Aufgabe der Erfindung ist es, einen trockenen Einbau der Brandschutzklappe in eine Wandöffnung zu ermöglichen.

Diese Aufgabe wird gelöst mit einer Brandschutzklappe der eingangs beschriebenen Gattung, die gekennzeichnet ist durch einen wenigstens einen Abschnitt der Brandschutzklappe umgebenden Einbaukörper aus einer Wärme absorbierenden Vergussmasse. Diese Brandschutzklappe kann fabrikmäßig vorgefertigt werden und braucht lediglich in die dafür vorgesehene Wandöffnung eingesetzt werden. Es versteht sich, dass der Außendurchmesser eines Einbaukörpers mit kreisförmigem Querschnitt nicht größer ist als der Durchmesser der Wandöffnung. Entsprechendes gilt für einen Einbaukörper mit rechteckigem oder quadratischem Querschnitt. Im Brandfall wird der Wärmefluss gebremst wegen der Wärme absorbierenden Vergussmasse.

Zweckmäßigerweise kann der Einbaukörper außenseitig wenigstens einen umlaufenden Dichtstreifen aus einem sich bei Wärmebeaufschlagung ausdehnenden Material tragen. Im Brandfall dehnt sich der umlaufende Dichtstreifen aus dem sich bei Wärmebeaufschlagung ausdehnenden Material aus und sorgt für eine zuverlässige Abdichtung der Wandöffnung gegen Rauch und Verbrennungsgase. Es versteht sich, dass in diesem Fall der Außendurchmesser eines Einbaukörpers mit kreisförmigem Querschnitt einschließlich Dichtstreifen nicht größer ist als der Durchmesser der Wandöffnung. Insbesondere kann der Einbaukörper aus einem mit der Vergussmasse gefüllten Einbaugehäuse bestehen.

Vorzugsweise besteht die Vergussmasse aus Anhydrit, Alpha-Halbhydrat, Verdicker, Fließmittel, Stabilisatoren und Wasser. Man kann aber auch eine Vergussmasse einsetzen, die ein Zwei-Komponenten-Gießmaterial auf der Basis von Aluminiumoxid/Siliciumoxid ist. Beide Materialien lassen sich fabrikmäßig in das die Brandschutzklappe umgebende Einbaugehäuse einfüllen.

Der Dichtstreifen besteht vorzugsweise aus einem im Wesentlichen Natriumsilikat und Chloroprenkautschuk enthaltenden Material. Insbesondere kann das Material des Dichtstreifens bestehen aus
32,5 bis 45,0 Gew.% Natriumsilikat,
20,0 bis 30,0 Gew.% Chloroprenkautschuk,
4,5 bis 10,8 Gew.% Wasser,
6,5 bis 10,2 Gew.% Borsäure,
4,0 bis 10,0 Gew.% Aluminiumhydroxid,
3,0 bis 10,0 Gew.% naphtenhaltige Erdölderivate,
1,0 bis 3,1 Gew.% Zinkoxid und
1,0 bis 5,0 Gew.% Eisen-III-oxid.

Ein Material dieser Zusammensetzung ist unter dem Handelsnamen 3M FS-195 E-FIS+ der Firma 3M-Company bekannt. Es wurde bisher für Feuerschutzplatten oder Feuerschutzstreifen eingesetzt, nicht aber bei Brandschutzklappen.

Vorzugsweise sollte der Einbaukörper oder das Einbaugehäuse im Bereich seiner axialen Enden jeweils einen umlaufenden Dichtstreifen tragen. Das Gehäuse kann unter dem Dichtstreifen auch perforiert sein, so dass sich das Material des Dichtstreifens auch in das Einbaugehäuse hinein ausdehnt.

Um den Einbau zu erleichtern, kann es zweckmäßig sein, wenn eine Stirnseite des Einbaukörpers oder des Gehäuses als sich über die Wandöffnung hinaus erstreckende Blende ausgebildet ist. Die Blende ist dann Anschlag für eine Wandseite. Zur Befestigung des Einbaukörpers oder des Einbaugehäuses mit Brandschutzklappe in der Wandöffnung kann zumindest eine von der Blende ausgehende Spannschraube für einen neben der Wandöffnung (auf der anderen Wandseite) angreifende Spannpratze vorgesehen sein.

Im Folgenden werden in der Zeichnung dargestellte Ausführungsbeispiele der Erfindung erläutert. Es zeigen:
- Fig. 1: Einbaubeispiele einer trocken eingebauten Brandschutzklappe,

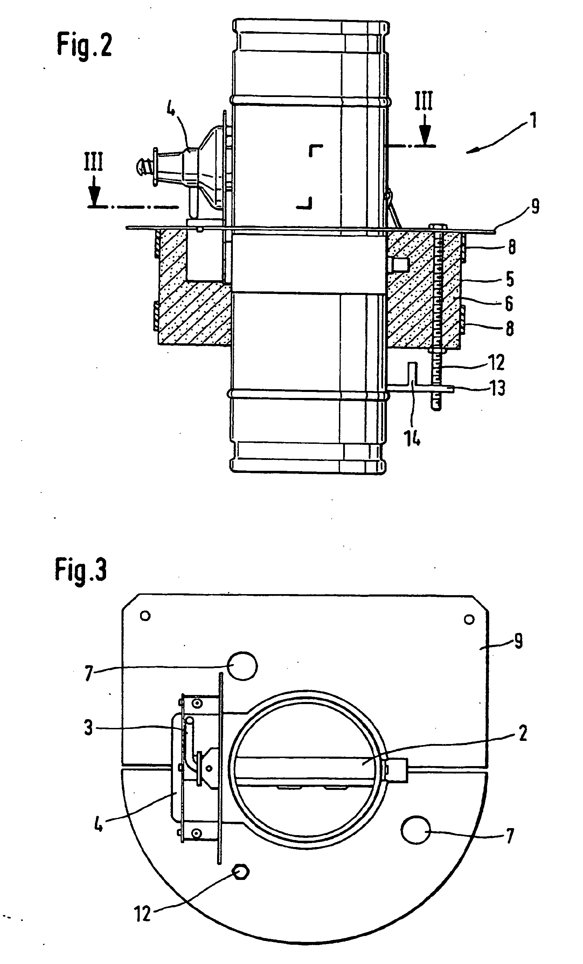

- Fig. 2: eine Ansicht der Brandschutzklappe, teilweise geschnitten und
- Fig. 3: eine Ansicht des Gegenstandes nach Fig. 2 in Richtung III-III.

Die in der Zeichnung dargestellte Brandschutzklappe 1 besitzt einen kreisförmigen Querschnitt. Die Brandschutzklappe 1 kann auch einen rechteckigen oder quadratischen Querschnitt besitzen. In der Brandschutzklappe 1 ist schwenkbar eine Absperrklappe 2 gelagert, die über ein Hebelgestänge 3 manuell oder motorisch betätigt werden kann. Das Hebelgestänge 3 ist zumindest teilweise in einer Konsole 4 untergebracht, die außen an der Brandschutzklappe 1 angeordnet ist.

Neben der Konsole 4 ist die Brandschutzklappe 1 von einem Einbaugehäuse 5 umgeben, das mit einer Wärme absorbierenden Vergussmasse 6 gefüllt ist. Die Vergussmasse 6 kann über Füllöffnungen 7 in das Einbaugehäuse 5 eingefüllt werden.

Als Vergussmasse eignet sich eine Mischung aus Anhydrit, Alpha-Halbhydrat, Verdicker, Fließmittel, Stabilisatoren und Wasser. Eine andere Vergussmasse besteht aus einem Zwei-Komponenten-Gießmaterial auf der Basis von Aluminiumoxid/Siliciumoxid.

Außen am Einbaugehäuse 5 sind mit gegenseitigem Abstand zwei umlaufende Dichtstreifen 8 verlegt, die aus einem sich bei Wärmebeaufschlagung ausdehnenden Material bestehen. Dieses Material besteht im Wesentlichen aus Natriumsilikat und Chloroprenkautschuk. Seine Zusammensetzung im Einzelnen ist wie folgt:
32,5 bis 45,0 Gew.% Natriumsilikat,
20,0 bis 30,0 Gew.% Chloroprenkautschuk,
4,5 bis 10,8 Gew.% Wasser,
6,5 bis 10,2 Gew.% Borsäure,
4,0 bis 10,0 Gew.% Aluminiumhydroxid,
3,0 bis 10,0 Gew.% naphtenhaltige Erdölderivate,
1,0 bis 3,1 Gew.% Zinkoxid und
1,0 bis 5,0 Gew.% Eisen-III-oxid.

Die beiden Dichtstreifen 8 sind neben den Stirnseiten des Einbaugehäuses 5 verlegt. Sie können mit einem nicht dargestellten Schutzstreifen abgedeckt sein. Unterhalb der Dichtstreifen 8 ist die Wandung des Einbaugehäuses 5 perforiert. Das ist im Einzelnen nicht dargestellt. Durch die Perforation hindurch kann sich das Material der Dichtstreifen 8 bei Wärmebeaufschlagung auch in das Einbaugehäuse 5 hinein ausdehnen.

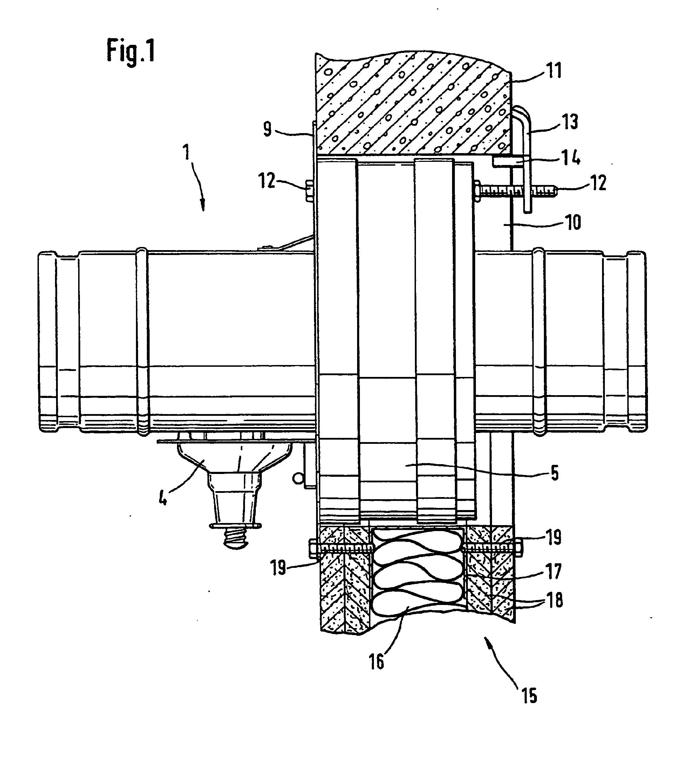

Eine Stirnseite des Einbaugehäuses 5 ist als Blende 9 ausgebildet, die sich bis über die in Fig. 1 dargestellte Wandöffnung 10 hinaus erstreckt.

Die Brandschutzklappe 1 mit Einbaugehäuse 5 wird in die vorgefertigte Wandöffnung 10 eingesetzt, bis sich die Blende 9 gegen die eine Seite der Wand 11 legt. Mit einer oder mehreren Spannschrauben 12, die von der Blende 9 ausgehen und sich durch das Einbaugehäuse 5 hindurch bis zur anderen Seite erstrecken und dort mit ihrem Gewindeabschnitt in ein zugeordnetes Innengewinde einer Spannpratze 13 eingreifen, kann die Brandschutzklappe 1 mit Einbaugehäuse 5 in der Wandöffnung 10 verspannt werden. Die Spannpratze 13 weist bei der dargestellten Ausführung eine Konsole 14 auf, mit der sie sich an der Innenseite der Wandöffnung 10 abstützt.

Im oberen Teil der Fig. 1 ist der Einbauzustand der Brandschutzklappe 1 mit Einbaugehäuse 5 in der Wandöffnung 10 einer massiven Wand 11 wiedergegeben.

Im unteren Teil der Fig. 1 ist der Einbau der Brandschutzklappe 1 mit Einbaugehäuse 5 in der Wandöffnung 10 einer Wand 15 wiedergegeben, die als Feuerschutz-Trennwand ausgebildet ist. Diese Wand 15 besteht aus einer mittigen Dämmschicht 16, deren Rand von einem Aussteifungsprofil 17 mit U-Profil eingefasst ist. Dieses Aussteifungsprofil 17 besteht in der Regel aus verzinktem Stahlblech. Beidseits der Dämmschicht 16 sind Gipskartonplatten 18 angeordnet. Weil bei dieser Wandausführung die Gipskartonplatten 18 im Brandfall wegbrennen, ist eine Befestigung mit Spannpratzen 13 nicht möglich. Dafür wird die Brandschutzklappe 1 mit Einbaugehäuse 5 von Befestigungsschrauben 19 gehalten, die von der Außenseite der Blende 9 sich durch die Gipskartonplatten 18 bis in die U-Schenkel des Aussteifungsprofils 17 erstrecken.

## Patentansprüche

1. Brandschutzklappe (1) zum Einbau in eine Wandöffnung (10), **gekennzeichnet durch** einen wenigstens einen Abschnitt der Brandschutzklappe (1) umgebenden Einbaukörper entweder aus einer Wärme absorbierenden Vergussmasse (6) oder bestehend aus einem mit einer Wärme absorbierenden Vergussmasse (6) gefüllten Einbaugehäuse.

2. Brandschutzklappe (1) nach Anspruch 1, **dadurch gekennzeichnet, dass** der Einbaukörper außenseitig wenigstens einen umlaufenden Dichtstreifen (8) aus einem sich bei Wärmebeaufschlagung ausdehnenden Material trägt.

3. Brandschutzklappe (1) nach Anspruch 1 oder 2, **dadurch gekennzeichnet, dass** die Vergussmasse (6) aus Anhydrit, Alpha-Halbhydrat, Verdicker, Fließmittel, Stabilisatoren und Wasser besteht.

4. Brandschutzklappe (1) nach Anspruch 1 oder 2, **dadurch gekennzeichnet, dass** die Vergussmasse (6) ein Zwei-Komponenten-Gießmaterial auf der Basis von Aluminiumoxid/Siliciumoxid ist.

5. Brandschutzklappe (1) nach einem der Ansprüche 1 bis 4, **dadurch gekennzeichnet, dass** der Dichtstreifen (8) aus einem im Wesentlichen Natriumsilikat und Chloroprenkautschuk enthaltenen Material besteht.

6. Brandschutzklappe (1) nach Anspruch 5, **dadurch gekennzeichnet, dass** das Material des Dichtstreifens (8) enthält:
32,5 bis 45,0 Gew.% Natriumsilikat,
20,0 bis 30,0 Gew.% Chloroprenkautschuk,
4,5 bis 10,8 Gew.% Wasser,
6,5 bis 10,2 Gew.% Borsäure,
4,0 bis 10,0 Gew.% Aluminiumhydroxid,
3,0 bis 10,0 Gew.% naphtenhaltige Erdölderivate,
1,0 bis 3,1 Gew.% Zinkoxid und
1,0 bis 5,0 Gew.% Eisen-III-oxid.

7. Brandschutzklappe (1) nach einem der Ansprüche 1 bis 6. **dadurch gekennzeichnet, dass** der Einbaukörper oder das Einbaugehäuse (5) im Bereich seiner axialen Enden jeweils einen umlaufenden Dichtstreifen (8) trägt.

8. Brandschutzklappe (1) nach einem der Ansprüche 1 bis 7, **dadurch gekennzeichnet, dass** das Einbaugehäuse (5) unter den Dichtstreifen (8) perforiert ist.

9. Brandschutzklappe (1) nach einem der Ansprüche 1 bis 8, **dadurch gekennzeichnet, dass** eine Stirnseite des Einbaukörpers oder des Einbaugehäuses (5) als eine sich über die Wandöffnung (10) hinaus erstreckende Blende (9) ausgebildet ist.

10. Brandschutzklappe (1) nach einem der Ansprüche 1 bis 9, **gekennzeichnet durch** zumindest eine von der Blende (9) ausgehende Spannschraube (12) für eine neben der Wandöffnung (10) angreifende Spannpratze (13).

## Claims

1. Fire prevention valve (1) to be mounted in a wall opening (10), **characterised by** a mounting body surrounding at least one section of the fire prevention valve (1), which body is either made from a heat-absorbing casting compound (6) or consists of a mounting housing (5) filled with a heat-absorbing casting compound (6).

2. Fire prevention valve (1) according to Claim 1. **characterised in that** the mounting body externally bears at least one circumferential sealing strip (8) made from a material that expands on heat impingement.

3. Fire prevention valve (1) according to Claim 1 or 2, **characterised in that** the casting compound (6) consists of anhydrite, alpha-hemihydrate, thickener, flow agent, stabilisers and water.

4. Fire prevention valve (1) according to Claim 1 or 2, **characterised in that** the casting compound (6) is a two-component casting material based on aluminium oxide/silicon oxide.

5. Fire prevention valve (1) according to one of Claims 1-4, **characterised in that** the sealing strip (8) consists of a material mainly containing sodium silicate and chloroprene rubber.

6. Fire prevention valve (1) according to Claim 5. **characterised in that** the material of the sealing strip (8) contains:
32.5%-45.0% wt. sodium silicate,
20.0%-30.0% wt. chloroprene rubber,
4.5%-10.8% wt. water,
6.5%-10.2% wt. boric acid,
4.0%-10.0% wt aluminium hydroxide,
3.0%-10.0% wt petroleum derivatives containing naphthene,
1.0%-3.1% wt. zinc oxide and
1.0%-5.0% wt. ferric oxide.

7. Fire prevention valve (1) according to one of Claims 1-6, **characterised in that** the mounting body or the mounting housing (5) bears a circumferential sealing strip (8) in the area of the axial ends thereof respectively.

8. Fire prevention valve (1) according to one of Claims 1-7. **characterised in that** the mounting housing (5) is perforated under the sealing strips (8).

9. Fire prevention valve (1) according to one of Claims 1-8, **characterised in that** a face of the mounting body or of the mounting housing (5) is formed as a cover (9) extending beyond the wall opening (10).

10. Fire prevention valve (1) according to Claim 9, **characterised by** at least one clamping screw (12), running from the cover (9), for a clamping claw (13) engaging next to the wall opening (10).

## Revendications

1. Valve anti-incendie (1) conçue pour être intégrée dans une ouverture murale (10) et **caractérisée par** un corps d'intégration entourant au moins une région de ladite valve anti-incendie (1) et constitué d'une masse de comblement (6) absorbant la chaleur, ou consistant en un boîtier d'intégration (5) empli d'une masse de comblement (6) absorbant la chaleur.

2. Valve anti-incendie (1) selon la revendication 1, **caractérisée par le fait que** le corps d'intégration porte, extérieurement, au moins une bande périphérique d'étanchement (8) en un matériau se dilatant sous l'action de la chaleur.

3. Valve anti-incendie (1) selon la revendication 1 ou 2, **caractérisée par le fait que** la masse de comblement (6) est constituée d'anhydrite, de semi-hydrate alpha, d'un épaississant, d'un solvant, de stabilisateurs et d'eau.

4. Valve anti-incendie (1) selon la revendication 1 ou 2, **caractérisée par le fait que** la masse de comblement (6) est un matériau coulé à deux composants, à base d'oxyde d'aluminium/oxyde de silicium.

5. Valve anti-incendie (1) selon l'une des revendications 1 à 4, **caractérisée par le fait que** la bande d'étanchement (8) consiste en un matériau renfermant, pour l'essentiel, du silicate de sodium et du caoutchouc au chloroprène.

6. Valve anti-incendie (1) selon la revendication 5, **caractérisée par le fait que** le matériau de la bande d'étanchement (8) renferme :
de 32,5 à 45,0 % en poids de silicate de sodium,
de 20,0 à 30,0 % en poids de caoutchouc au chloroprène,
de 4,5 à 10,8 % en poids d'eau,
de 6,5 à 10,2 % en poids d'acide borique,
de 4,0 à 10,0 % en poids d'hydroxyde d'aluminium,
de 3,0 à 10,0 % en poids de dérivés pétroliers contenant du naphtène,
de 1,0 à 3,1 % en poids d'oxyde de zinc, et
de 1,0 à 5,0 % en poids d'oxyde ferrique.

7. Valve anti-incendie (1) selon l'une des revendications 1 à 6, **caractérisée par le fait que** le corps d'intégration, ou le boîtier d'intégration (5), porte respectivement une bande périphérique d'étanchement (8) dans la région de ses extrémités axiales.

8. Valve anti-incendie (1) selon l'une des revendications 1 à 7, **caractérisée par le fait que** le boîtier d'intégration (5) est perforé au-dessous de la bande d'étanchement (8).

9. Valve anti-incendie (1) selon l'une des revendications 1 à 8, **caractérisée par le fait qu'**une face frontale du corps d'intégration, ou du boîtier d'intégration (5), est réalisée sous la forme d'une pièce d'occultation (9) s'étendant au-delà de l'ouverture murale (10).

10. Valve anti-incendie (1) selon la revendication 9, **caractérisée par** au moins une vis de serrage (12) partant de la pièce d'occultation (9) et assignée à une griffe de serrage (13) venant en prise à côté de l'ouverture murale (10).
